# EUROPEAN PATENT APPLICATION

(11) **EP 1 990 798 A1**
(43) Date of publication of application: **12.11.2008**
(21) Application number: 07737426.2
(22) Date of filing: 27.02.2007
(51) Int. Cl.: G09G 5/10, G09G 3/20, G09G 3/36, G09G 5/00, G09G 5/02, G09G 5/22, G09G 5/36, H04M 1/00, H04N 5/202, H04N 5/58

(54) **MOBILE TELEPHONE TERMINAL, SCREEN DISPLAY CONTROL METHOD USED FOR THE SAME, AND PROGRAM THEREOF**

(30) Priority: 01.03.2006 JP 2006054257
(71) Applicant: NEC Corporation, Minato-ku Tokyo 108-8001 (JP)
(72) Inventor: UCHIKAWA, Tatsuya, Tokyo 108-8001 (JP)
(74) Representative: Glawe, Delfs, Moll
(86) International application number: PCT/JP2007/053624
(87) International publication number: WO 2007/099944

(57) **Abstract**

It is possible to provide a mobile telephone terminal capable of optimizing the gamma characteristic in display setting and performing high-quality display based on user's taste. When an image to be displayed is selected, a CPU (13) of the mobile telephone terminal (1) judges whether to perform display setting by manual setting or automatic setting. It the CPU (13) judges that the display setting is performed by automatic setting, the CPU (13) recognizes a selected image by executing image recognition software or the like and reads out the setting content of the gamma characteristic corresponding to the image recognition result from a gamma characteristic setting table (20). It the CPU (13) judges that the display setting is to be performed by manual setting, the CPU (13) reads out the setting content of gamma characteristic corresponding to an image pattern specified on a specification screen, from the gamma characteristic setting table (20). The CPU (13) controls a display device driver (17) to display the selected image according to the setting content read out from the gamma characteristic setting table (20), on a display device (18).

## Description

### TECHNICAL FIELD

The present invention relates to a mobile telephone terminal, a screen display control method used for the same, and a program thereof, in particular, setting a gamma characteristic of an image to be displayed on a screen of a mobile telephone terminal.

### BACKGROUND ART

Mobile telephone terminals have been including more functions other than calling, such as e-mailing, shooting with a camera, browsing, and the like, and display images to be displayed on those screens (display devices) have been more variable. Meanwhile, users have been requiring higher quality for a display function of the mobile telephone terminals.

However, a conventional mobile telephone terminal is capable of corresponding to only one display setting as a display function, while there are various types of images, such as character information for an e-mail, a people display image and a landscape display image shot by a camera, a mixture display image including a browsed character and image together, and the like. Also, with respect to the various types of images, only a common display setting is assigned to gamma characteristic at an innocuous level.

For a conventional mobile information apparatus, there is a method is proposed (refer to Patent Document 1, for example), in which luminance information is detected from image information, and gradation of the image information is calibrated in accordance with the detected luminance information, so that a user can visually recognize an image display with ease.
Patent Document 1: Japanese Patent Application Laid-open No. 2003-051967

### DISCLOSURE OF THE INVENTION

### PROBLEMS TO BE SOLVED BY THE INVENTION

However, the aforementioned conventional mobile telephone terminal can respond only one display setting as the display function, and only a common display setting is assigned to the gamma characteristic at the innocuous level. Therefore, there is a problem in display performance to deal with various types of display images. Further, preference of uses has become diversified into a bright image, a reddish image, a sharp image, or the like. Therefore, customizing a display setting has been another problem.

In other words, the conventional mobile telephone terminal has the display function in which a gamma characteristic in the display device is set in accordance with only one display setting in each device. Because a common display setting is assigned to the gamma characteristic at an innocuous level with respect to each of a character image, a people image, a landscape image, and the like, an optimal value cannot be set with respect to each of various display images, which has been a problem in the display performance. Further, the display setting cannot be customized depending on preference of a user, which cannot satisfy the user's needs.

According to the technique mentioned in Patent Document 1, the object is to enhance visibility of an image to be displayed on a color LCD which is used as a display section of the mobile telephone. Therefore, it cannot solve the problem to realize the display setting respect to various display images such as a character image, a people image, a landscape image, and the like.

Therefore, an object of the present invention is to provide a mobile telephone terminal, a screen display control method used for the same, and a program thereof, which are capable of solving the previously mentioned problems, optimizing a gamma characteristic in display setting depending on an image to be displayed, and displaying an image with a higher quality, based on the user's taste.

### MEANS FOR SOLVING THE PROBLEMS

A mobile telephone terminal according to the present invention capable of displaying at least character information and image information on a display device includes a setting unit for setting a gamma characteristic in response to a type of data to be displayed on the display device.

A screen display control method, according to the present invention, is the method used for a mobile telephone terminal capable of displaying at least character information and image information on a display device, and the method includes executing a setting processing for setting a gamma characteristic in response to a type of data to be displayed on the display device by either the mobile telephone terminal or the display device.

A program for a screen display control method, according to the present invention, is the program used for a mobile telephone terminal capable of displaying at least character information and image information on a display device, the program allows a computer to execute a setting processing for setting a gamma characteristic in response to a type of data to be displayed on the display device.

In other words, the mobile telephone terminal according to the present invention includes a display setting function capable of selecting a setting value for a gamma characteristic depending on image data to be displayed (such as the character information, a people image, a landscape image, and the like), and the display setting function includes an automatic setting in accordance with image data to be displayed and a customization setting by a user, for setting the gamma characteristic.

Accordingly, in the mobile telephone terminal according to the present invention, a gamma characteristic can be set optimally depending on an image to be displayed, and a higher quality display, which is based on the user's taste, can be achieved.

More specifically, in the mobile telephone terminal according to the present invention, a setting value for a previously prepared gamma characteristic is optimized automatically, or in accordance with user selection, with respect to variable images to be displayed on a screen, such as character information like an e-mail, a people display image and a landscape display image of camera images, a mixture display image including browsed character and image, and the like. Thus, higher quality display performance, which is based on the user's taste, can be achieved.

Further, in the mobile telephone terminal according to the present invention, the display screen may be divided into a plurality of screens and gamma characteristics may be optimized to be set for each divided display screen. Moreover, in the mobile telephone terminal according to the present invention, even if the terminal is used outdoors, the setting value of the previously prepared gamma characteristic can be customized depending on an environment by the automatic setting or the user selection.

As above, in the mobile telephone terminal according to the present invention, a gamma characteristic is set in an optimal value depending on an image to be displayed. Thus, higher quality display performance can be achieved. Further, in the mobile telephone terminal according to the present invention, the display setting for an image to be displayed can be customized by a user. Thus, the display quality, which is based on the user's taste, can be achieved. Furthermore, in the mobile telephone terminal according to the present invention, a gamma characteristic is set in an optimal value for each image to be displayed depending on a usage environment. Thus, higher quality display performance can be achieved.

### ADVANTAGEOUS EFFECT OF THE INVENTION

According to the present invention, having the aforementioned construction and operation, the gamma characteristics in the display setting can be optimized depending on an image to be displayed. Thus, the higher quality and user preferable display can be realized.

### BEST MODE FOR CARRYING OUT THE INVENTION

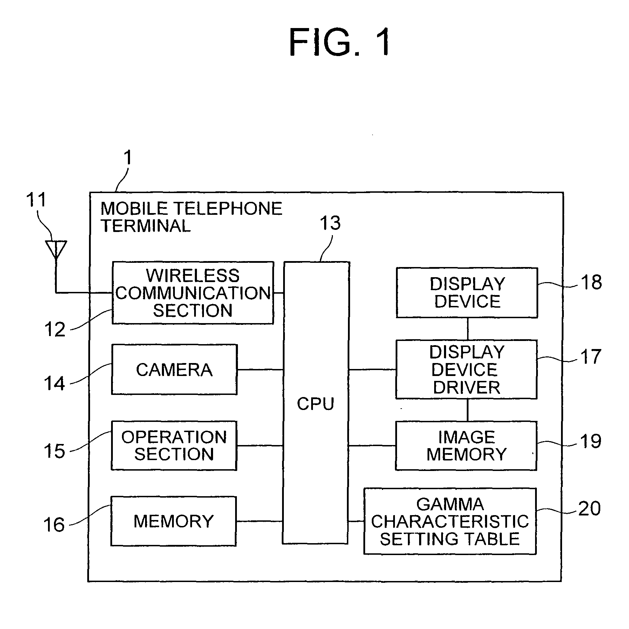

Next, exemplary embodiments of the invention will be explained with reference to the drawings. Fig. 1 is a block diagram showing a construction of a mobile telephone terminal according to a first exemplary embodiment. In Fig. 1, a mobile telephone terminal 1 includes an antenna 11, a wireless communication section 12, a CPU (central processing unit) 13, a camera (an image pickup device) 14, an operation section 15, a memory 16, a display device driver 17, a display device 18, an image memory 19, and a gamma characteristic setting table 20.

The wireless communication section 12 is connected to the antenna 11 for usual voice communication, and the like, and communicates with a base station (unillustrated) for the usual voice communication, and the like. The operation section 15 includes various keys, such as a dial key, an arrow key, and the like. The memory 16 stores information, such as setting information and inside information (an address book, for example), a program to be executed by the CPU 13, and the like. The memory 16 also stores image recognition software for recognizing display image data.

The display device 18 is a device such as an LCD (Liquid Crystal Display), and the like, for displaying the character information, a people image, a landscape image, or a mixture image including character and image, which are in the image memory 19, in accordance with control and drive by the display device driver 17. The gamma characteristic setting table 20 previously stores a gamma characteristic with respect to an image pattern recognized by the above image recognition software, and the like.

The gamma characteristic can be set by either or both of an automatic setting depending on an image pattern to be displayed and a manual setting capable of customization by a user, and can be set for respective R, G, B independently, or R, G, B all together. Further, in the mobile telephone terminal 1, a display screen of the display device 18 may be divided into a plurality of screens, and each function may be divided to be processed separately so as to set an optimal gamma characteristic for each display screen.

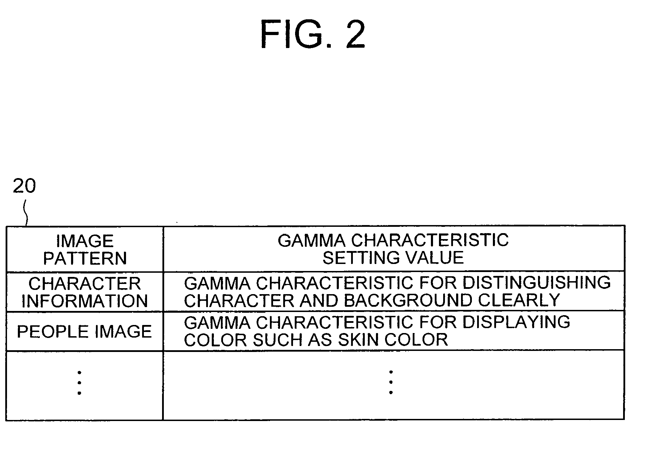

Fig. 2 is a diagram showing a construction of the gamma characteristic setting table 20. In Fig. 2, the gamma characteristic setting table 20 stores an image pattern and a gamma characteristic setting value. For example, for a case where an image pattern is about the "character information", the gamma characteristic setting table 20 stores a gamma characteristic setting value of "a gamma characteristic for distinguishing between a character and a background". Further, for a case where the image pattern is a "people image", the gamma characteristic setting table 20 stores a gamma characteristic setting value of "a gamma characteristic for optimizing skin color and the like".

The gamma characteristics is a characteristic showing luminance with respect to a gradation. When a horizontal axis indicates the gradations and a vertical axis indicates the luminance, the gamma characteristics is not shown only by an upward sloped line, but also by an S-curve, and the like, which shows the fine adjustment being performed depending on an image pattern to be displayed. The gamma characteristics can be set for R, G, B independently, and the gamma characteristics sometimes corrects a color and a gradation characteristic peculiar to a display device, too.

Therefore, specifically, in a case of character information such as an e-mail, the gamma characteristics is set to be exhibited almost in the S-curve, as an above described gamma characteristic setting value, so as to distinguish clearly between a character and a background, for enhancing visibility of the character. In a case of a people image, a gamma characteristic is set so that an intermediate gradation can be exactly realized and that skin color and the like can be displayed clearly.

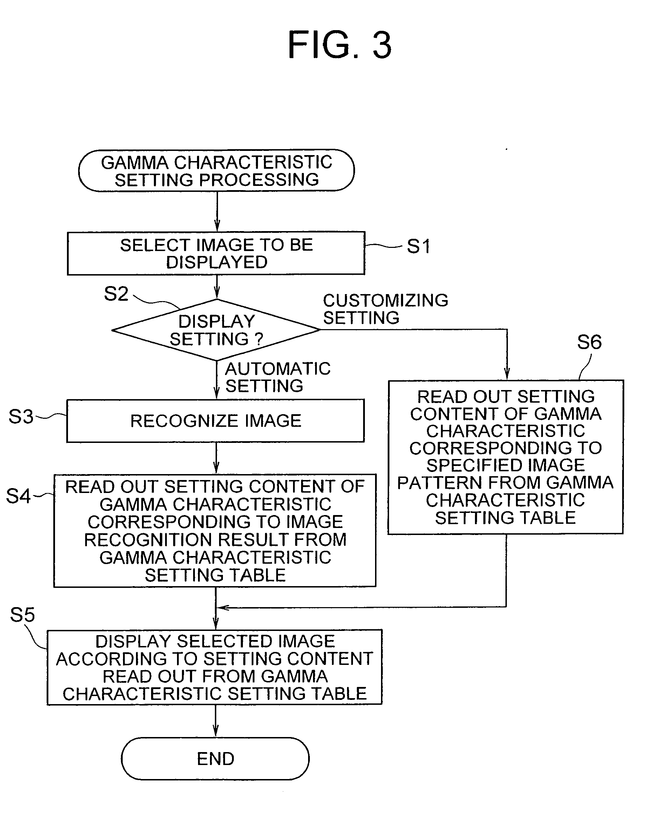

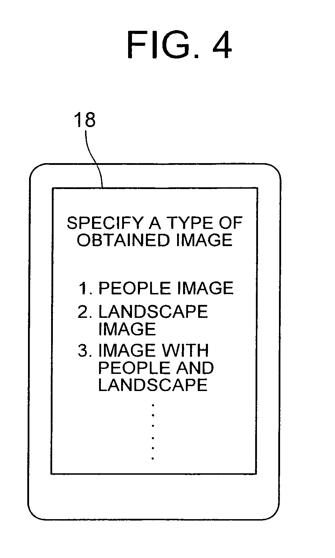

Fig. 3 is a flowchart showing a gamma characteristic setting processing in the mobile telephone terminal 1 according to the first exemplary embodiment of the invention. Fig. 4 is a diagram showing a specification screen for respective image types when a gamma characteristic is to be set by the manual setting in the flow shown in Fig. 3. The gamma characteristic setting processing in the mobile telephone terminal 1 according to the first exemplary embodiment of the invention will be explained with reference to Figs. 1 - 4. In this case, the processing shown in Fig. 3 can be realized when the CPU 13 in the mobile telephone terminal 1 executes a program stored in the memory 16.

In a case where an image is displayed in the mobile telephone terminal 1 according to the first exemplary embodiment of the invention, a flow, in which display image data is recognized, a gamma characteristic with respect to the recognized image pattern is set, and an image is displayed with the set gamma characteristic, will be explained sequentially.

Firstly, the recognition of display image data will be explained. Images to be displayed in the mobile telephone terminal 1 are variable, which are, for example, the character information such as an e-mail and the like, a people display image and a landscape display image of the camera images, a mixture display image including browsed character and image, and the like. According to the exemplary embodiment, with respect to those variable images, what type of an image is being displayed on the display screen is determined by the CPU 13.

Operation of the mobile telephone terminal 1 is configured to be hierarchized, from a large classification to a small classification using a menu. Contents to be displayed are roughly determined depending on each menu item, so that display images for each menu item can be assumed in some extent. Accordingly, when a menu item is selected, image patterns can be classified into several kinds.

For example, in a case with an e-mail, a large portion thereof is the character information and it is classified into a character image pattern. In a case with data from the camera 14, a large portion thereof is the shot image and it is classified into a certain image pattern. However, it cannot be identified usually whether the data from the camera 14 represents a people image or a landscape image. Therefore, information for identifying the type of the image pattern may be added to the data in advance when the data is stored. Further, image information may be added automatically or manually to an image downloaded by a communication function of the mobile telephone terminal 1.

Next, setting a gamma characteristic which is optimal with respect to the recognized image pattern will be explained. A gamma characteristic which is optimal with respect to the recognized image pattern may be set by performing the automatic setting or the user preference setting. When setting an optimal gamma characteristic automatically, optimal gamma characteristics are previously assigned to a plurality of image patterns, and the recognized image pattern is compared with those image patterns described above so as to select a gamma characteristic.

The gamma characteristic setting table 20 stores the optimal gamma characteristics previously assigned to the plurality of image patterns. The CPU 13 reads out a gamma characteristic corresponding to the image pattern which is recognized by executing the image recognition software or the like, from the gamma characteristic setting table 20, and set. In this case, the gamma characteristics can be set optimally with respect to R, G, B independently, as described above, so that color can be adjusted to make a reddish image, and the like.

Finally, displaying an image with the set gamma characteristic on a display device will be explained. The set gamma characteristic is realized by correcting the display image data with the software processing in the CPU 13, or by correcting the display image data with hardware in the display device driver 17.

That is, in the case where the above gamma characteristic setting processing is to be performed, when an image to be displayed is selected by selecting each menu item (Step S1 in Fig. 3), the CPU 13 of the mobile telephone terminal 1 determines whether the display setting is performed by the manual setting or the automatic setting (Step S2 in Fig. 3).

If the automatic setting is checked in advance in the menu items for display setting, the CPU 13 determines that the display setting is performed by the automatic setting (an automatic setting mode), and executes the image recognition software and the like so as to recognize a selected image (Step S3 in Fig. 3). The CPU 13 reads out a setting content for a gamma characteristic corresponding to the image recognition result from the gamma characteristic setting table 20 (Step S4 in Fig. 3), and controls the display device driver 17 so that the display device 18 displays the selected image in accordance with the setting content read out from the gamma characteristic setting table (Step S5 in Fig. 3).

On the other hand, when the manual setting is checked in advance in the menu items for display setting, the CPU 13 determines that the customization setting is to be performed for the display setting (a customization setting mode), and controls the display device driver 17 so that the display device 18 displays a specification screen for image types, such as the one shown in Fig. 4. When an image pattern (an image type) is specified on the specification screen, the CPU 13 reads out a setting content for a gamma characteristic corresponding to the specified image pattern from the gamma characteristic setting table 20 (Step S6 in Fig. 3), and controls the display device driver 17 so that the display device 18 displays the selected image in accordance with the setting content read out from the gamma characteristic setting table (Step S5 in Fig. 3).

As described, according to the exemplary embodiment, the gamma characteristics is set optimally depending on an image to be displayed in the mobile telephone terminal 1. Thus, higher quality display performance can be achieved. Further, according to the present invention, a user customizes the display setting for an image to be displayed. Thus, a display quality preferable for the user can be achieved.

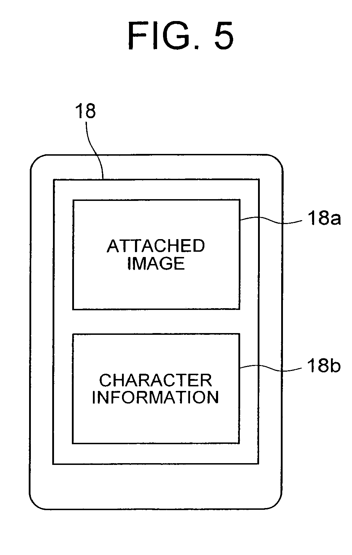

Fig. 5 is a diagram showing a display screen area in the display device of a mobile telephone terminal 1 according to a second exemplary embodiment of the invention. The mobile telephone terminal according to the second exemplary embodiment of the invention has the same construction with the mobile telephone terminal 1 according to the first exemplary embodiment of the invention shown in Fig. 1. However, the second exemplary embodiment is different from the first exemplary embodiment of the invention in that a display screen of a display device 18 is divided into a screen area for a display image of character information and a screen area for a display image of the camera image, an accompanying image of an e-mail, and the like.

When the display image data is divided into a plurality of sections, as described above, display images are recognized in the mobile telephone terminal 1 at each display screen area 18a, 18b respectively, and optimal gamma characteristics are set respectively as well as the gamma characteristic setting processing described above. For example, when a browser is displayed, an image and a text are recognized and optimal gamma characteristics are set in the display areas 18a and 18b respectively.

Accordingly, in the exemplary embodiment, higher quality display performance can be achieved at each of the plurality of display areas 18a and 18b. In addition, since a user can customize the display setting for an image to be displayed on each of the plurality of display areas 18a and 18b, display quality preferable for the user can be achieved at each plural area 18a and 18b. In the case where a browser is displayed, an image and a text are recognized respectively so that optimal gamma characteristics can be set at each display area.

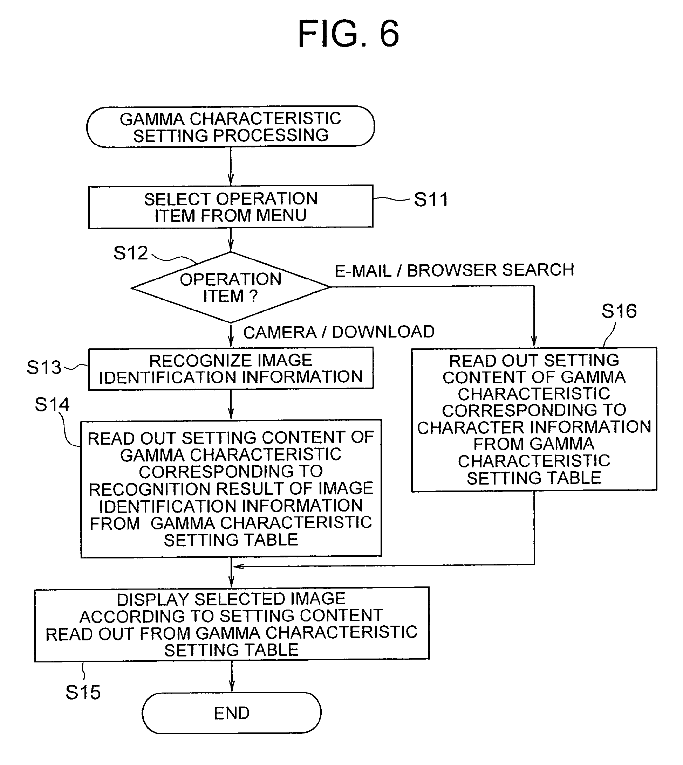

Fig. 6 is a flowchart showing a gamma characteristic setting processing in a mobile telephone terminal according to a third exemplary embodiment of the invention. The mobile telephone terminal according to the third exemplary embodiment of the invention has the same construction with the mobile telephone terminal 1 according to the first exemplary embodiment of the invention shown in Fig. 1. However, it is different from the first exemplary embodiment in that a gamma characteristic is set in response to a selected menu item in a menu which is configured to be hierarchized, from a large classification to a small classification. In this case, processes shown in Fig. 6 are realized when the CPU 13 of the mobile telephone terminal 1 executes a program stored in the memory 16.

That is, in the case where the gamma characteristic setting processing described above is to be performed, an operation item is selected from the menu (Step S11 in Fig. 6), and when the operation item is for shooting an image with a camera or downloading an image (Step S12 in Fig.6), the CPU 13 of the mobile telephone terminal 1 recognizes image identification information which is added to the images (Step S13 in Fig. 6).

The CUP 13 reads out a setting content for a gamma characteristic corresponding to the recognized result of the image identification information from the gamma characteristic setting table 20 (Step S14 in Fig. 6), and controls the display device driver 17 so that the display device 18 displays an image corresponding to the selected operation item in accordance with the setting content read out from the gamma characteristic setting table 20.

On the other hand, when the selected operation item is for an e-mail or searching a browser (Step S12 in Fig. 6), the CPU 13 reads out a setting content for a gamma characteristic corresponding to the character information from the gamma characteristic setting table 20 (Step S16 in Fig. 6), and control the display device driver 17 so that the display device 18 displays an image corresponding to the selected operation item (the character information, in this case) in accordance with the setting content read out from the gamma characteristic setting table 20 (Step S15 in Fig. 6).

As described, according to the present invention, the gamma characteristics is set optimally for each image (the character information, a people image, a landscape image, a mixture display image including a character and an image) which is displayed in response to a selected operation item. Thus, higher quality display performance can be held.

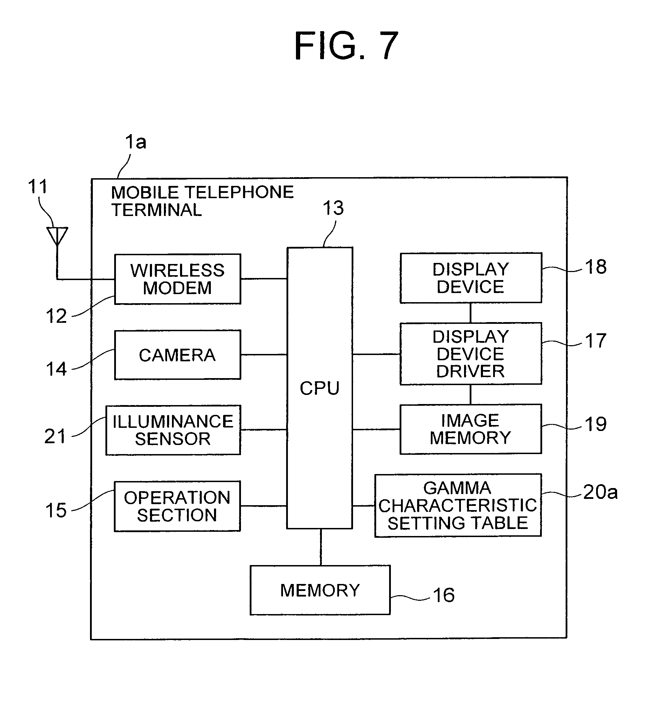

Fig. 7 is a block diagram showing a construction of a mobile telephone terminal according to a fourth exemplary embodiment of the invention. In Fig. 7, a mobile telephone terminal 1a according to the fourth exemplary embodiment of the invention is different from the first exemplary embodiment in that an illuminance sensor 21 and a gamma characteristic setting table 20a, which is configured such that a gamma characteristic setting table corresponding to the illuminance sensor is added to the gamma characteristic setting table 20, are provided. Other constructions of the mobile telephone terminal 1a are the same as the mobile telephone terminal 1 according to the first exemplary embodiment of the invention shown in Fig. 1, and same components have the same reference numerals. Operation of the same components is the same as in the first exemplary embodiment of the invention.

The illuminance sensor 21 is a device for detecting illuminance information of outside light, which can be arranged inside or outside the display device 18. According to the exemplary embodiment, a gamma characteristic is set so as to be able to view an image easily in strong outside light, by detecting the illuminance information of outside light using the illuminance sensor 21. Accordingly, in the exemplary embodiment, the gamma characteristics are set optimally for each display image with respect to the usage environment (indoors, outdoors, or the like), and higher quality display performance can be achieved.

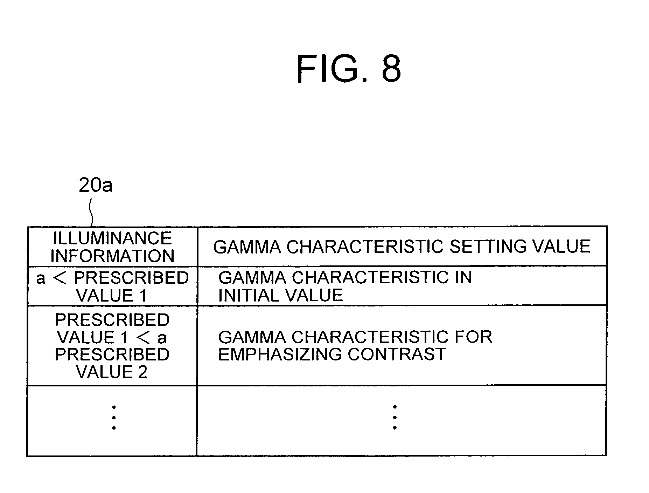

Fig. 8 is a diagram showing a construction of the gamma characteristic setting table 20a in Fig. 7. In Fig. 8, the gamma characteristic setting table 20a stores the illuminance information and a gamma characteristic setting value, in addition to the table shown in Fig. 2. For example, the gamma characteristic setting table 20a stores "an initial value of a gamma characteristic" as the gamma characteristic setting value when the illuminance information is equal to or less than a prescribed value 1. Further, the gamma characteristic setting table 20a stores "a gamma characteristic for emphasizing contrast" as the gamma characteristic setting value when the illuminance information is in a range between the previously set prescribed values 1 and 2.

In a case where the terminal is used outdoors, and when the illuminance information is in the range between the prescribed values 1 and 2, a gamma characteristic is set to emphasize contrast for preventing degradation of visibility caused by the outside light. In this case, the illuminance sensor 21 is provided so that the gamma characteristic is automatically set in accordance with the outside light (the illuminance information) detected by the illuminance sensor 21. However, the gamma characteristic can be also set manually by a user for improving the visibility in the outside light. Further, when the illuminance information is equal to or more than the prescribed value 2, a gamma characteristic may be set so as to emphasize the contrast more.

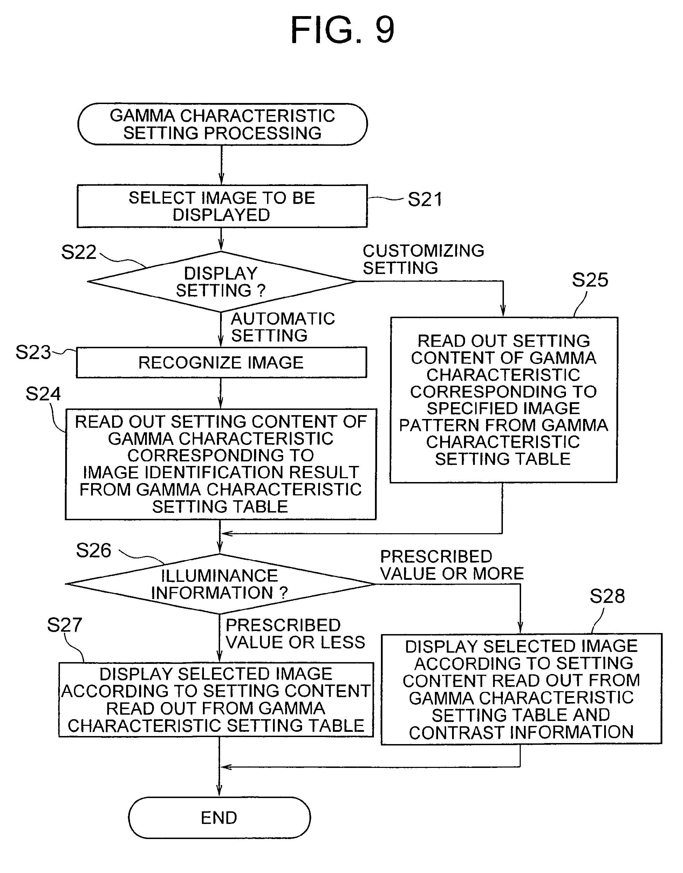

Fig. 9 is a flowchart showing a gamma characteristic setting processing in the mobile telephone terminal 1a according to the fourth exemplary embodiment of the invention. The gamma characteristic setting processing of the mobile telephone terminal 1a according to the fourth exemplary embodiment of the invention will be explained with reference to Figs. 7 - 9. In this case, the processing shown in Fig. 3 is achieved when the CPU 13 in the mobile telephone terminal 1 executes a program stored in the memory 16.

In the CPU 13 of the mobile telephone terminal 1, when the gamma characteristic setting processing above is performed, and if an image to be displayed is selected (Step S21 in Fig. 9), the display setting is determined to be performed whether by the manual setting or the automatic setting (Step S22 in Fig. 9).

If the automatic setting is previously checked in the menu for the display setting, the CPU 13 determines that the display setting is to be performed by the automatic setting (the automatic setting mode), and executes the above image recognition software and the like so as to recognize the selected image (Step S23 in Fig. 9). The CPU 13 reads out a setting content for a gamma characteristic corresponding to the image recognition result from the gamma characteristic setting table 20a (Step S24 in Fig. 9).

On the other hand, if the manual setting is previously checked in the menu for the display setting, the CPU 13 determines that the display setting is to be performed by the customization setting (the customization setting mode), and controls the display device driver 17 so that the display device 18 displays the specification screen for specifying the type of the image as shown in Fig. 4. When an image pattern (an image type) is specified in this specification screen, the CPU 13 reads out a setting content for a gamma characteristic corresponding to the specified image pattern from the gamma characteristic setting table 20a (Step S26 in Fig. 9).

Next, when the illuminance information detected by the illuminance sensor 21 is equal to or less than the above prescribed value (Step S26 in Fig. 9), the CPU 13 controls the display device driver 17 so that the display device 18 displays the selected image in accordance with the setting content read out from the gamma characteristic setting table 20a (Step S27 in Fig. 9).

When the illuminance information detected by the illuminance sensor 21 is equal to the above prescribed value or more (Step S26 in Fig. 9), the CPU 13 controls the display device driver 17 so that the display device 18 displays the selected image in accordance with the setting content read out from the gamma characteristic setting table and contrast information (Step S28 in Fig. 9).

As described, according to the present invention, the gamma characteristics are set optimally at each image to be displayed with respect to the usage environment (indoors, outdoors, or the like). Thus, higher quality display performance can be achieved.

The present invention is not limited to each of the above described exemplary embodiments. Each exemplary embodiment can be combined to be conducted.

### BRIEF DESCRIPTION OF THE DRAWINGS

[Fig. 1] A block diagram showing a construction of a mobile telephone terminal according to a first exemplary embodiment of the invention;
[Fig. 2] A diagram showing a construction of a gamma characteristic setting table in Fig. 1;
[Fig. 3] A flowchart showing a gamma characteristic setting processing in the mobile telephone terminal according to the first exemplary embodiment of the invention;
[Fig. 4] A diagram showing a specification screen for exhibiting an image type in a case where a gamma characteristic is to be set by a manual setting in the flow shown in Fig. 3;
[Fig. 5] A diagram showing a display image area in a display device of a mobile telephone terminal according to a second exemplary embodiment of the invention;
[Fig. 6] A flowchart showing a gamma characteristic setting processing in a mobile telephone terminal according to a third exemplary embodiment of the invention;
[Fig. 7] A block diagram showing a construction of a mobile telephone terminal according to a fourth exemplary embodiment of the invention;
[Fig. 8] A diagram showing a construction of a gamma characteristic setting table in Fig. 7;
[Fig. 9] A flowchart showing a gamma characteristic setting processing in the mobile telephone terminal according to the fourth exemplary embodiment of the invention.

### REFERENCE NUMERALS

- 1, 1a: MOBILE TELEPHONE TERMINAL
- 11: ANTENNA
- 12: WIRELESS COMMUNICATION SECTION
- 13: CPU
- 14: CAMERA
- 15: OPERATION SECTION
- 16: MEMORY
- 17: DISPLAY DEVICE DRIVER
- 18: DISPLAY DEVICE
- 19: IMAGE MEMORY
- 20, 20A: GAMMA CHARACTERISTIC SETTING TABLE
- 21: ILLUMINANCE SENSOR

## Claims

1. A portable telephone terminal capable of displaying at least character information and image information on a display device, comprising a setting means for setting a gamma characteristic in response to a type of data to be displayed on the display device.

2. The mobile telephone terminal, as claimed in claim 1, comprising a determination means for determining a type of the data in an automatic setting mode for the gamma characteristic, wherein
the setting means sets the gamma characteristic in response to a type of data determined by the determination unit.

3. The mobile telephone terminal, as claimed in claim 1 or 2, comprising a means for displaying a specification screen to specify a type of data to be displayed on the display device when a user customizes the gamma characteristic, wherein
the setting means sets the gamma characteristic in response to a type of data specified on the specification screen.

4. The mobile telephone terminal, as claimed in claim 1, wherein the setting means sets the gamma characteristic in response to a selected menu item in a hierarchically configured menu.

5. The mobile telephone terminal, as claimed in claim 1, wherein the setting means sets the gamma characteristic in response to a type of data to be displayed on each of a plurality of display screens when a display screen of the display device is divided into the plurality of screens.

6. The mobile telephone terminal, as claimed in claim 1, wherein the setting means identifies the character information and the image information when the character information and the image information are displayed together, and sets the gamma characteristic at each display area.

7. The mobile telephone terminal, as claimed in claim 1, comprising an illuminance sensor provided with either inside or outside the display device for detecting illuminance information of outside light, wherein
the setting means sets the gamma characteristic in response to the illuminance information of the outside light detected by the illuminance sensor.

8. The mobile telephone terminal, as claimed in claim 1, wherein the setting means sets the gamma characteristic for R, G, B in the data independently or all together.

9. A screen display control method used for a mobile telephone terminal capable of displaying at least character information and image information on a display device, wherein
either the mobile telephone terminal or a driver of the display device executes a setting processing for setting a gamma characteristic in response to a type of data to be displayed on the display device.

10. The screen display control method, as claimed in claim 9, wherein
the mobile telephone terminal performs a determination processing for determining a type of the data in an automatic setting mode for the gamma characteristic, and
the gamma characteristic is set in response to a type of data determined by the determination processing in the setting processing.

11. The screen display control method, as claimed in claim 9, wherein
the mobile telephone terminal performs a processing for displaying a specification screen to specify a type of data to be displayed on the display device when a user customizes the gamma characteristic, and
the gamma characteristic is set in response to a type of data specified on the specification screen in the setting processing.

12. The screen display control method, as claimed in claim 9, wherein the gamma characteristic is set in response to a selected menu item in a hierarchically configured menu, in the setting processing.

13. The screen display control method, as claimed in claim 9, wherein the gamma characteristic is set in response to a type of data to be displayed on each of a plurality of display screens when a display screen of the display device is divided into the plurality of display screens for displaying the data, in the setting processing.

14. The screen display control method, as claimed in claim 9, wherein the character information and the image information are identified when the character information and the image information are displayed together, and the gamma characteristic is set at each display area, in the setting processing.

15. The screen display control method, as claimed in claim 9, wherein
the mobile telephone terminal comprises an illuminance sensor provided either inside or outside the display device for detecting illuminance information of outside light, and
the gamma characteristic is set in response to the illuminance information of the outside light detected by the illuminance sensor in the setting processing.

16. The screen display control method, as claimed in claim 9, wherein the gamma characteristic is set for R, G, B in the data independently or all together in the setting processing.

17. A program for a screen display control method used for a mobile telephone terminal capable of displaying at least character information and image information on a display device, the program allows a computer to execute a setting processing for setting a gamma characteristic in response to a type of data to be displayed on the display device.
